# EUROPEAN PATENT APPLICATION

(11) **EP 3 340 180 A1**
(43) Date of publication of application: **27.06.2018**
(21) Application number: 16306739.0
(22) Date of filing: 20.12.2016
(51) Int. Cl.: G06T 15/00, G06T 15/06, G06T 15/50

(54) **DEVICE AND METHOD FOR SCENE RENDERING BY PATH TRACING WITH COMPLEX LIGHTING**

(71) Applicant: Thomson Licensing, 92130 Issy-les-Moulineaux (FR)
(72) Inventor: DUFAY, Arthur, 35576 Cesson Sévigné (FR); LECOCQ, Pascal, 35576 Cesson Sévigné (FR); MARVIE, Jean-Eudes, 35576 Cesson Sévigné (FR)
(74) Representative: Huchet, Anne

(57) **Abstract**

A 3D scene (2) illuminated by light sources (L1, L2) is rendered on an image grid (3) by path tracing. At least one ray originating from each grid pixel (P1A, P1 B, P2) is traced in the 3D scene until it meets an object (21, 22) at a crossing point (M1A, M1 B, M2), that ray is bounced towards one of the light sources, a visibility test is made for that ray between the crossing point and that light source, and a contribution of that light ray is added at the crossing point in carrying out the rendering at the concerned pixel. The visibility tests are carried out over the pixels in a clustered way according to the light sources. Application to a GPU.

## Description

### 1. TECHNICAL FIELD

The invention relates to the domain of image rendering in computer graphics, notably for the interactive rendering of virtual 3D scenes with complex lighting. It is more particularly directed to GPU real-time rendering (Graphics Processing Unit).

In the present disclosure, the term "rendering" refers broadly to the conversion of geometry and material data into visual images.

### 2. BACKGROUND ART

Rendering of realistic lighting effects requires proper simulation of full light exchanges in a scene by taking into account all direct and indirect lighting contributions. The challenging task consists in solving the rendering equation representing the integral of all lighting contributions reaching a surface that are scattered in all directions. Such an equation is e.g. described in the article by James T. Kajiya, "The Rendering Equation", ACM SIGGRAPH Computer Graphics, n° 143-150, 1986.

However, solving that rendering equation is not trivial, and no analytic solution exists, mostly because of the visibility problem induced by complex scene geometry. Stochastic ray tracing methods such as Path tracing (see notably the above ACM SIGGRAPH reference) need to trace a huge amount of light paths to solve it.

As many stochastic paths do not directly reach a light source, path tracing engines often rely on a direct light sampling strategy along the paths, referred to as next event simulation. This method improves path tracing convergence speed by directly sampling a light source at each bounce along a path and adding its light contribution to the energy carried by the path.

This technique greatly helps in adding energy to the path, but could be enhanced in required computing time.

### 3. SUMMARY

A purpose of the present disclosure is to still reduce computing time with respect to existing path tracing techniques and to accelerate shadow computation in rendering algorithm, while making possible to keep identical sampling strategies.

An object of the disclosure is notably a rendering device compatible with existing ray-tracing systems or deferred rendering engines, and advantageously easy to implement on graphics hardware.

In this respect, the present disclosure relates to a device for rendering on an image grid by path tracing a 3D scene illuminated by at least two light sources, the image grid comprising pixels. The device includes at least one processor configured for:
- tracing for each of the pixels at least one ray originating from that pixel in the 3D scene until that ray meets an object of the 3D scene at a crossing point;
- bouncing that ray from the crossing point onto the object towards at least one of the light sources of the 3D scene;
- making a visibility test for that ray between the crossing point and the light source;
- only when the visibility test results in a positive output, adding a contribution of the light source at the crossing point in carrying out the rendering at that pixel of the image grid.

According to the present disclosure, the at least one processor is further configured for proceeding with the visibility tests over the pixels in a clustered way according to the light sources.

The clustering of the visibility tests for the set of pixels has advantageously the effect of improving ray coherency, because light visibility rays computed in parallel on the GPU are associated with a same region in 3D space, i.e. the considered light source. A light visibility ray (or shadow ray) is a ray sent from one point of the 3D scene to another for testing the visibility between those two points.

The above device provides advantageously an increase in speed processing with respect to the existing solutions with direct light sampling. Indeed, the latter tend to break the GPU cache coherency because light sources are chosen stochastically. Furthermore, in those known techniques, stochastic light source selection leads to unorganized shadow rays (used for the visibility tests), i.e. a group of rays computed in a GPU warp are tracing rays starting from random surfaces going to random light sources. This unorganized distribution of shadow rays is bad for memory coherency, and entails processing delays.

The present device can help to get a better coherency between shadow rays computed in a same GPU warp. Namely, the connection paths can be sorted by light sources in their path tracing implementations.

The clustering of the visibility tests can more generally be implemented in terms of computations and/or of memory storage.

In a particular implementation, the at least one processor is configured for carrying out the visibility test for each of the pixels, between the crossing point and the light source, by launching a light visibility ray from the light source towards the crossing point.

That implementation with reverse shadow rays is particularly interesting, because rays computed in parallel on the GPU usually start from roughly the same point in the 3D space. The possible ray start position from the light source is thus greatly reduced compared with a classic light ray query, when rays can start from any surface in the 3D scene.

The clustered solution can be implemented using one of several methods, such as a fast GPU reduction over a buffer containing ray queries. An example of such an implementation (referred to as stream compaction) is given in the article by D. V. Antwerpen, "Improving SIMD efficiency for parallel Monte Carlo light transport on the GPU", Proceedings of the ACM SIGGRAPH Symposium on High Performance Graphics, pp. 41-50, 2011.

Preferably, the image grid being provided with buffering storage, the at least one processor is also configured for:
- storing the contribution of the light source at the crossing point into the buffering storage only when the visibility test results in a positive output;
- before making the visibility test, distributing the buffering storage into at least two reduced light buffers, each of those reduced light buffers corresponding to one of the light sources associated with one of the pixels;
- making the visibility test by querying the reduced light buffers.

The buffering storage comprises advantageously buffer elements mapped respectively to the pixels.

More precisely, in a particular embodiment, the at least one processor is configured for storing, for each of the pixels, an index of the light source associated with that pixel into the buffer element mapped to that pixel.

Also advantageously, the at least one processor is configured for clustering the buffer elements into the reduced light buffers, and/or for storing into each of the reduced light buffers, for each of the pixels, an index of the light source associated with that pixel and a position of the crossing point associated with that pixel.

Preferably, the at least one processor is configured for executing in parallel at least two of the visibility tests associated with any of the light sources.

In a preferred implementation, the device further comprises:
- at least one input adapted to receive data on the 3D scene and on the light sources;
- at least one output adapted to output a rendered image resulting from the rendering.

The disclosure also concerns a device for rendering on an image grid by path tracing a 3D scene illuminated by at least two light sources, the image grid comprising pixels. The device includes:
- means for tracing for each of the pixels at least one ray originating from that pixel in the 3D scene until that ray meets an object of the 3D scene at a crossing point;
- means for bouncing that ray from the crossing point onto the object towards at least one of the light sources of the 3D scene;
- means for making a visibility test for that ray between the crossing point and the light source;
- means for adding, only when the visibility test results in a positive output, a contribution of the light source at the crossing point in carrying out the rendering at that pixel of the image grid.

According to the present disclosure, the means for making the visibility test are further configured for proceeding with the visibility tests over the pixels in a clustered way according to the light sources.

The invention further pertains to a GPU or Graphics Processing Unit comprising at least one processor adapted to creating images, at least one frame buffer adapted to storing the created images and at least one output to a display adapted to providing the created images from the frame buffer(s) to the display.

According to the disclosure, the GPU comprises a device for rendering compliant with any of the above embodiments.

The disclosure also concerns a method for rendering on an image grid by path tracing a 3D scene illuminated by at least two light sources, that image grid comprising pixels. That method comprises:
- tracing for each of the pixels at least one ray originating from that pixel in the 3D scene until that ray meets an object of the 3D scene at a crossing point;
- bouncing that ray from the crossing point onto the object towards at least one of the light sources of the 3D scene;
- making a visibility test for that ray between the crossing point and that light source;
- only when the visibility test results in a positive output, adding a contribution of that light source at the crossing point in carrying out the rendering at that pixel of the image grid.

According to the disclosure, that method further comprises proceeding with the visibility tests over the pixels in a clustered way according to the light sources.

That method is preferably executed by a device according to any of the above embodiments.

In addition, the disclosure relates to a computer program for rendering a 3D scene, comprising software code adapted to perform steps of a method compliant with any of the above execution modes when the program is executed by a processor.

The present disclosure further pertains to a non-transitory program storage device, readable by a computer, tangibly embodying a program of instructions executable by the computer to perform a method for rendering a 3D scene compliant with the present disclosure.

Such a non-transitory program storage device can be, without limitation, an electronic, magnetic, optical, electromagnetic, infrared, or semiconductor device, or any suitable combination of the foregoing. It is to be appreciated that the following, while providing more specific examples, is merely an illustrative and not exhaustive listing as readily appreciated by one of ordinary skill in the art: a portable computer diskette, a hard disk, a ROM (read-only memory), an EPROM (Erasable Programmable ROM) or a Flash memory, a portable CD-ROM (Compact-Disc ROM).

### 4. LIST OF FIGURES

The present disclosure will be better understood, and other specific features and advantages will emerge upon reading the following description of particular and non-restrictive illustrative embodiments, the description making reference to the annexed drawings wherein:
- figure 1 is a block diagram representing schematically a device for rendering a 3D scene on an image grid by path tracing, compliant with the present disclosure;
- figure 2 illustrates a light sampling applied to a 3D scene for an image grid from an observer viewpoint, with the device of figure 1;
- figure 3 shows light sampling storage corresponding to the image grid of figure 2;
- figure 4 represents reduced light buffers derived from the light sampling storage of figure 3;
- figure 5 is a flow chart showing successive rendering steps executed with the device of figure 1;
- figure 6 diagrammatically shows a graphics processing apparatus comprising the device represented on figure 1.

### 5. DETAILED DESCRIPTION OF EMBODIMENTS

The present description illustrates the principles of the present disclosure. It will thus be appreciated that those skilled in the art will be able to devise various arrangements that, although not explicitly described or shown herein, embody the principles of the disclosure and are included within its spirit and scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, and the like represent various processes which may be substantially represented in computer readable media and so executed by a computer or processor, whether or not such computer or processor is explicitly shown.

The terms "adapted" and "configured" are used in the present disclosure as broadly encompassing initial configuration, later adaptation or complementation of the present device, or any combination thereof alike, whether effected through material or software means (including firmware).

The functions of the various elements shown in the figures may be provided through the use of dedicated hardware as well as hardware capable of executing software in association with appropriate software. When provided by a processor, the functions may be provided by a single dedicated processor, a single shared processor, or a plurality of individual processors, some of which may be shared. Moreover, explicit use of the term "processor" should not be construed to refer exclusively to hardware capable of executing software, and refers in a general way to a processing device, which can for example include a computer, a microprocessor, an integrated circuit, or a programmable logic device (PLD). Additionally, the instructions and/or data enabling to perform associated and/or resulting functionalities may be stored on any processor-readable medium such as, e.g., an integrated circuit, a hard disk, a CD (Compact Disc), an optical disc such as a DVD (Digital Versatile Disc), a RAM (Random-Access Memory) or a ROM memory. Instructions may be notably stored in hardware, software, firmware or in any combination thereof.

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces.

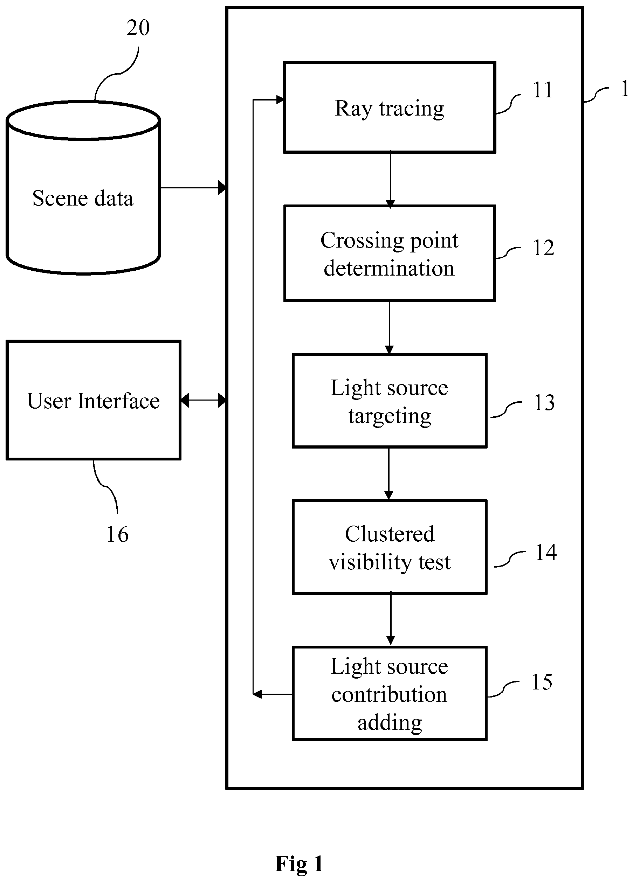

The present disclosure will be described in reference to a particular functional embodiment of device 1 for rendering a 3D scene, as illustrated on **Figure 1****.**

The device 1 is adapted to render a 3D scene illuminated by light sources, by a path tracing process.

The device 1 is advantageously an apparatus, or a physical part of an apparatus, designed, configured and/or adapted for performing the mentioned functions and produce the mentioned effects or results. In alternative implementations, the device 1 is embodied as a set of apparatus or physical parts of apparatus, whether grouped in a same machine or in different, possibly remote, machines.

In what follows, the modules are to be understood as functional entities rather than material, physically distinct, components. They can consequently be embodied either as grouped together in a same tangible and concrete component, or distributed into several such components. Also, each of those modules is possibly itself shared between at least two physical components. In addition, the modules are implemented in hardware, software, firmware, or any mixed form thereof as well. They are preferably embodied within at least one processor of the device 1.

The device 1 comprises a module 11 for tracing rays in a 3D scene, a module 12 for determining crossing points corresponding to intersections of those rays with objects in the 3D scene, a module 13 for targeting light sources from bounces of those rays on those objects, a module 14 for executing visibility tests clustered with respect to the light sources, and a module 15 for adding resulting light source contributions at the crossing points. The modules 11 to 15 are chained one to another, while the module 15 is looping back to the module 11 for pursuing the ray tracing in the 3D scene.

Information can be entered and retrieved by a user via a user interface 16 interacting with the device 1. The user interface 16 includes any means appropriate for entering or retrieving data, information or instructions, notably visual, tactile and/or audio capacities that can encompass any or several of the following means as well known by a person skilled in the art: a screen, a keyboard, a trackball, a touchpad, a touchscreen, a loudspeaker, a voice recognition system.

The device 1 is also adapted to be fed with scene data from storage resources 10. Alternatively or complementarily, the device 1 is configured for receiving scene data from other devices or parts of devices, advantageously in real time. Those scene data include information on geometry (e.g. objects and light sources shapes, sizes and positions in a 3D scene, including with respect to viewpoints, depth maps and/or shadow maps), on light properties of materials (e.g. translucent objects, specular or diffusion surfaces, reflectance values, kinds of light behavior representations) and on lighting conditions (e.g. kinds of light sources, considered as punctual or as area sources, lighting intensities). The device 1 is preferably configured for being able to process such data when the latter vary dynamically in time.

The storage resources 10 can be available from any kind of appropriate storage means, which can be notably a RAM or an EEPROM (Electrically-Erasable Programmable Read-Only Memory) such as a Flash memory, possibly within an SSD (Solid-State Disk).

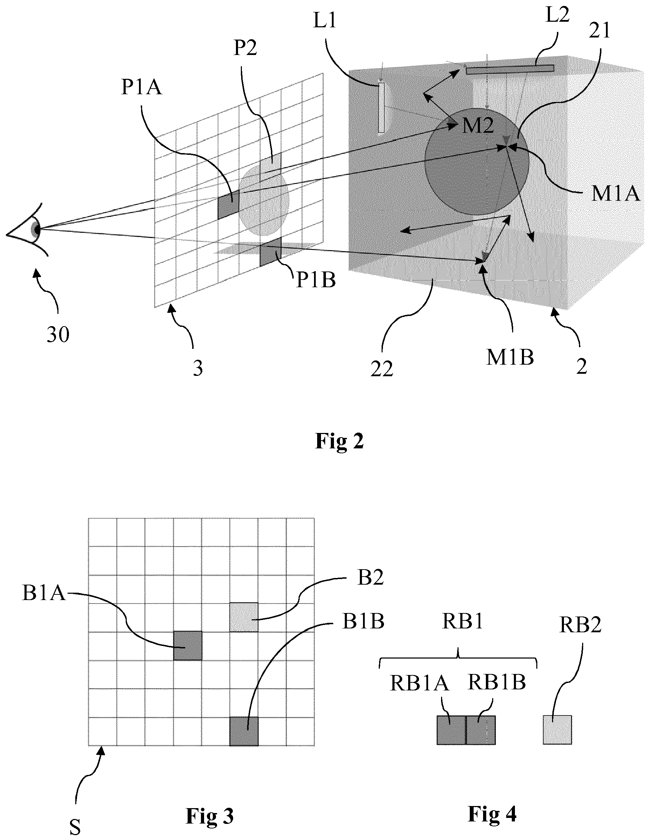

The implementation of the method is clarified on **Figure 2****,** showing a 3D scene 2 to be represented on a 2D image grid 3 from an observer viewpoint 30. The image grid 3 is constituted by an array of pixels. Also, the 3D scene 2 includes objects such as a 3D object 21 and a ground 22, and is illuminated by light sources L1, L2. Light rays are reflected from scattering onto the objects 21, 22.

In operation, paths are launched from the pixels in the 3D scene 2 as viewed by the observer viewpoint 30 (module 11). When one of those paths intersects an object of the scene 2, a corresponding crossing point is determined (module 12). In the illustrated example, this is the case with the 3D object 21 intersected at crossing points M1A and M2, and with the ground 22 intersected at a crossing point M1 B.

One of the light sources is then chosen randomly for each of those crossing points M1A, M1B and M2 (module 13), and a visibility test is effected between the concerned crossing point and the associated selected light source (module 14). In the illustrated example, the crossing points M1A, M1 B are both associated with light source 1, while the crossing point M2 is associated with light source L2. In compliance with the disclosure, the visibility tests are carried out for the set of pixels of the image grid 3 in a clustered way with respect to the light sources L1, L2 - i.e. the processing of the visibility test is carried out jointly for M1A and M1 B, and in a possibly separate way for M2.

The lighting contributions of the light sources L1 and L2 are then added to the radiance computations for M1A, M1B and M2 as appropriate (module 15), which leads to related representations respectively for pixels P1A, P1B and P2 in the image grid 3.

The clustered operations applied to the visibility tests are more detailed below in a particular implementation, with reference to **Figures 3 and 4****.** A 2D grid of threads being mapped to the 2D image grid 3 of pixels of the image, a 2D buffer storage S (such as a buffer) is used for light sampling. That 2D buffer storage is thereby mapped on the computing grid and on the image grid 3. Each thread in the computing grid is responsible of computing a path for one of the pixels.

At each bounce along the path, the light source randomly selected for the current pixel has an index stored in the 2D buffer storage S. In the illustrated example (**Figure 3**), the light sampling storage S is partitioned according to the pixels of the image grid 3, so that positions B1A, B1B and B2 correspond respectively to pixels P1A, P1B and P2 and receive associated data.

The light sampling storage S is advantageously reduced dynamically into N small buffers, N being the number of involved light sources. In the example (**Figure 4**), N = 2 and the small (or reduced) buffers RB1 and RB2 correspond respectively to the light sources L1 and L2. The reduced buffer RB1 contains then two positions RB1A and RB1 B corresponding respectively to the crossing points M1A and M1B, while the reduced buffer RB2 contains one position corresponding to the crossing point M2.

Reverse ray queries are then computed on those N small buffers (RB1, RB2) to solve the visibility between sampled light sources and surfaces.

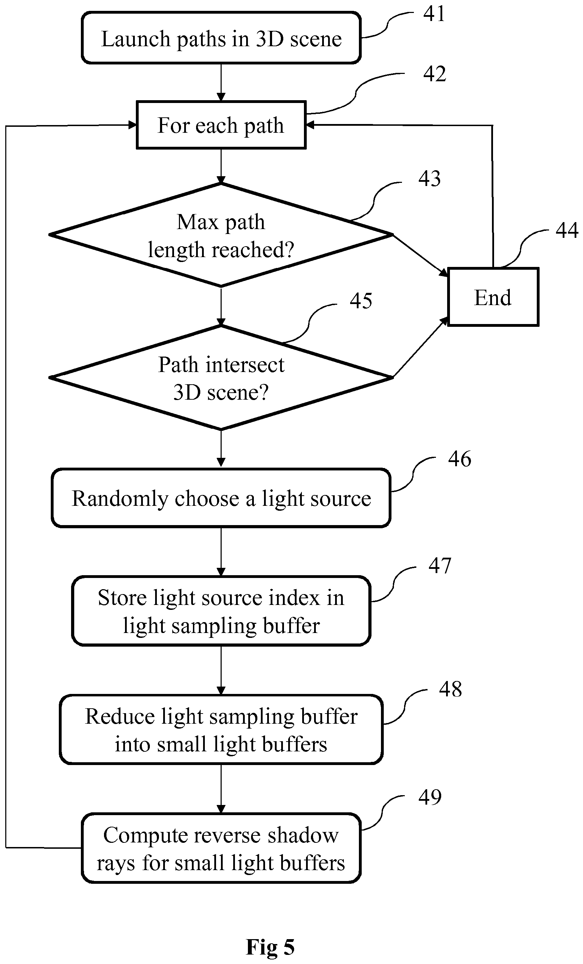

In execution, as illustrated on **Figure 5** the device 1 proceeds preferably as follows in a rendering operation. In an initiation stage (step 41), paths are launched in the 3D scene 2. Then, for each path (box 42), it is checked whether a maximum path length is reached (step 43). If yes, the processing is ended for that path (step 44). Otherwise, it is checked whether the path intersects the 3D scene 2 (step 45). If no, the processing is ended for that path (step 44).

Otherwise, a light source is randomly chosen, in relation with the crossing point obtained from the intersection between the path and the 3D scene 2 (step 46). A related light source index is accordingly stored in the light sampling storage S (step 47).

Then, collectively for the paths and thus the pixels of the image grid 3, the light sampling storage S is reduced into the N small light buffers (step 48) and reversed shadow rays are computed for those light buffers (step 49).

Those features are advantageously implemented in a GPU shader or a computing kernel.

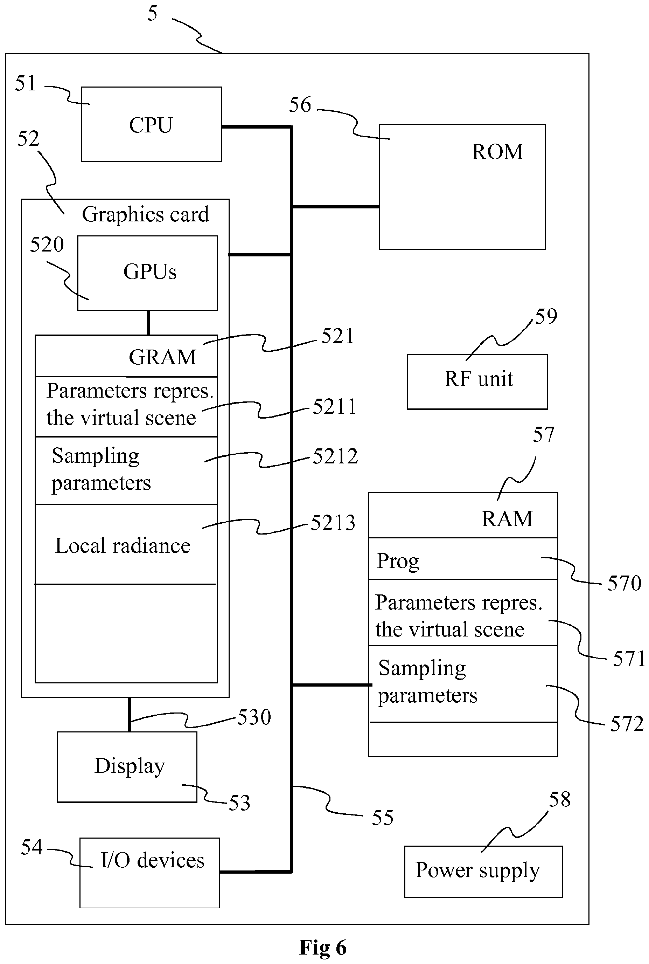

A particular apparatus 5, visible on **Figure 6****,** is embodying the device 1 described above. It corresponds for example to a personal computer (PC), a laptop, a tablet, a smartphone or a games console - such as a specialized games console producing and displaying images live. The apparatus 5 comprises the following elements, connected to each other by a bus 55 of addresses and data that also transports a clock signal:
- a microprocessor 51 (or CPU) ;
- a graphics card 52 comprising several Graphical Processor Units (or GPUs) 520 and a Graphical Random Access Memory (GRAM) 521;
- a non-volatile memory of ROM type 56;
- a RAM 57;
- one or several I/O (Input/Output) devices 54 such as for example a keyboard, a mouse, a joystick, a webcam; other modes for introduction of commands such as for example vocal recognition are also possible;
- a power source 58 ; and
- a radiofrequency unit 59.

The apparatus 5 also comprises a display device 53 of display screen type directly connected to the graphics card 52 to display synthesized images calculated and composed in the graphics card, for example live. The use of a dedicated bus to connect the display device 53 to the graphics card 52 offers the advantage of having much greater data transmission bitrates and thus reducing the latency time for the displaying of images composed by the graphics card. According to a variant, a display device is external to apparatus 5 and is connected thereto by a cable or wirelessly for transmitting the display signals. The apparatus 5, for example the graphics card 52, comprises an interface for transmission or connection adapted to transmit a display signal to an external display means such as for example an LCD or plasma screen or a video-projector. In this respect, the RF unit 59 can be used for wireless transmissions.

It is noted that the word "register" used in the description of memories 521, 56, and 57 designates in each of the memories mentioned, both a memory zone of low capacity (some binary data) as well as a memory zone of large capacity (enabling a whole program to be stored or all or part of the data representative of data calculated or to be displayed). Also, the registers represented for GRAM 521 can be arranged and constituted in any manner, and each of them does not necessarily correspond to adjacent memory locations and can be distributed otherwise (which covers notably the situation in which one register includes several smaller registers).

When switched-on, the microprocessor 51 loads and executes the instructions of the program contained in the RAM 57.

The random access memory 57 comprises notably:
- in a register 570, the operating program of the microprocessor 51 responsible for switching on the apparatus 5,
- in a register 571, parameters representative of the scene (for example modelling parameters of the object(s) of the scene, lighting parameters of the scene);
- in a register 572, sampling parameters, such as e.g. the light sampling storage S and the small light buffers RB1, RB2.

The algorithms implementing the steps of the method specific to the present disclosure and described above are stored in the memory GRAM 521 of the graphics card 52 associated with the apparatus 5 implementing those steps. When switched on and once the parameters 571 and 572 representative of the environment and peak-shape functions data are loaded into the RAM 57, the graphic processors 520 of graphics card 52 load those parameters into the GRAM 521 and execute the instructions of those algorithms in the form of microprograms of "shader" type using HLSL (High Level Shader Language) language or GLSL (OpenGL Shading Language) for example.

The random access memory GRAM 521 comprises notably:
- in a register 5211, the parameters representative of the scene,
- in a register 5212, the loaded sampling parameters,
- in a register 5213, local radiance computed in the frame of the rendering operations.

According to a variant, at least some of the data pertaining to primitives are stored in the RAM 57 and processed by the microprocessor 51. This variant however causes greater latency time in the composition of an image comprising a representation of the environment composed from microprograms contained in the GPUs 520 as the data must be transmitted from the graphics card to the random access memory 57 passing by the bus 55, for which the transmission capacities are generally inferior to those available in the graphics card for transmission of data from the GPUs 520 to the GRAM 521 and vice-versa.

According to another variant, the power supply 58 is external to the apparatus 1.

On the ground of the present disclosure and of the detailed embodiments, other implementations are possible and within the reach of a person skilled in the art without departing from the scope of the invention. Specified elements can notably be interchanged or associated in any manner remaining within the frame of the present disclosure. Also, elements of different implementations may be combined, supplemented, modified, or removed to produce other implementations. Notably, any BRDF (Bidirectional Reflectance Distribution Function) models can be exploited while preserving the described functionalities. All those possibilities are contemplated by the present disclosure.

## Claims

1. A device (1, 5) for rendering on an image grid (3) by path tracing a 3D scene (2) illuminated by at least two light sources (L1, L2), said image grid comprising pixels, said device including at least one processor configured for:
- tracing for each of said pixels at least one ray originating from said each of said pixels in said 3D scene until said at least one ray meets an object (21, 22) of said 3D scene at a crossing point (M1A, M1B, M2);
- bouncing said at least one ray from said crossing point onto said object towards at least one of said light sources of said 3D scene;
- making a visibility test for said at least one ray between said crossing point and said at least one of said light sources;
- only when said visibility test results in a positive output, adding a contribution of said at least one of said light sources at said crossing point in carrying out said rendering at said pixel of said image grid;
**characterized in that** said at least one processor is further configured for proceeding with said visibility tests over said pixels in a clustered way according to said light sources.

2. A device (1, 5) according to claim 1, **characterized in that** said at least one processor is configured for carrying out said visibility test for each of said pixels, between said crossing point and said light source, by launching a light visibility ray from said light source towards said crossing point.

3. A device (1, 5) according to claim 1 or 2, **characterized in that** said image grid being provided with buffering storage (S), said at least one processor is also configured for:
- storing said contribution of said light source at said crossing point into said buffering storage only when said visibility test results in a positive output;
- before making said visibility test, distributing said buffering storage into at least two reduced light buffers (RB1, RB2), each of said reduced light buffers corresponding to one of said light sources (L1, L2) associated with one of said pixels (P1A, P1B, P2);
- making said visibility test by querying said reduced light buffers.

4. A device (1, 5) according to claim 3, **characterized in that** said buffering storage comprises buffer elements mapped respectively to said pixels.

5. A device (1, 5) according to claim 4, **characterized in that** said at least one processor is configured for storing, for each of said pixels, an index of said light source associated with said each of said pixels into the buffer element mapped to said each of said pixels.

6. A device (1, 5) according to any of claims 3 to 5, **characterized in that** said at least one processor is configured for clustering said buffer elements into said reduced light buffers.

7. A device (1, 5) according to any of claims 3 to 6, **characterized in that** said at least one processor is configured for storing into each of said reduced light buffers, for each of said pixels, an index of said light source associated with said each of said pixels and a position of said crossing point associated with said each of said pixels.

8. A device (1, 5) according to any of the preceding claims, **characterized in that** said at least one processor is configured for executing in parallel at least two of said visibility tests associated with any of said light sources.

9. A device (1, 5) according to any of the preceding claims, **characterized in that** it further comprises:
- at least one input adapted to receive data on said 3D scene and on said light sources;
- at least one output adapted to output a rendered image resulting from said rendering.

10. A GPU or Graphics Processing Unit comprising at least one processor adapted to creating images, at least one frame buffer adapted to storing said created images and at least one output to a display adapted to providing said created images from said at least one frame buffer to said display, **characterized in that** said GPU comprises a device (1, 5) for rendering compliant with any of claims 1 to 9.

11. A method for rendering on an image grid (3) by path tracing a 3D scene (2) illuminated by at least two light sources (L1, L2), said image grid comprising pixels (P1A, P1 B, P2), said method comprising:
- tracing for each of said pixels at least one ray originating from said each of said pixels in said 3D scene until said at least one ray meets an object of said 3D scene at a crossing point (M1A, M1 B, M2);
- bouncing said at least one ray from said crossing point onto said object towards at least one of said light sources of said 3D scene;
- making a visibility test for said at least one ray between said crossing point and said at least one of said light sources;
- only when said visibility test results in a positive output, adding a contribution of said at least one of said light sources at said crossing point in carrying out said rendering at said pixel of said image grid;
**characterized in that** said method further comprises proceeding with said visibility tests over said pixels in a clustered way according to said light sources.

12. A method according to claim 11 **characterized in that** it is executed by a device according to any of claims 1 to 9.

13. Computer program for rendering a 3D scene, comprising software code adapted to perform steps of a method compliant with claim 11 or 12 when the program is executed by a processor.
